# EUROPÄISCHE PATENTSCHRIFT

(11) **EP 3 729 170 B1**
(45) Veröffentlichungstag und Bekanntmachung des Hinweises auf die Patenterteilung: **01.06.2022**
(21) Anmeldenummer: 18807941.2
(22) Anmeldetag: 21.11.2018
(51) Int. Cl.: G02B 27/01

(54) **OPTISCHES SYSTEM ZUM ÜBERTRAGEN EINES QUELLBILDES**
OPTICAL SYSTEM FOR TRANSMITTING A SOURCE IMAGE
SYSTÈME OPTIQUE POUR LA TRANSMISSION D'UNE IMAGE SOURCE

(30) Priorität: 18.12.2017 DE 102017130344
(43) Veröffentlichungstag der Anmeldung: 28.10.2020
(73) Patentinhaber: Tooz Technologies GmbH, 73430 Aalen (DE)
(72) Erfinder: HILLENBRAND, Matthias, 07745 Jena (DE); DOBSCHAL, Hans-Juergen, 99510 Kleinromstedt (DE); DEGEN, Artur, 07743 Jena (DE); MUENZ, Holger, 73430 Aalen (DE)
(74) Vertreter: Witte, Weller & Partner Patentanwälte mbB
(86) Internationale Anmeldenummer: PCT/EP2018/082041
(87) Internationale Veröffentlichungsnummer: WO 2019/120839

(56) Entgegenhaltungen:
- WO-A1-2017/011333
- DE-A1-102014 207 492
- DE-A1-102015 122 055
- DE-B4-102014 207 492
- DE-B4-102015 122 055
- US-A1- 2017 235 144

## Beschreibung

Die Erfindung betrifft ein optisches System zum Übertragen eines Quellbildes, mit einer Lichtleiteranordnung, die einen Lichtübertragungskanal definiert, mit einer optischen Einkoppelanordnung und mit einer optischen Auskoppelanordnung, wobei die Einkoppelanordnung dazu ausgebildet ist, von dem Quellbild ausgehendes Licht in die Lichtleiteranordnung derart einzukoppeln, dass das in die Lichtleiteranordnung eingekoppelte Licht in der Lichtleiteranordnung durch Totalreflexion propagieren kann, und wobei die Auskoppelanordnung dazu ausgebildet ist, das in der Lichtleiteranordnung propagierte Licht aus der Lichtleiteranordnung auszukoppeln, wobei die Lichtleiteranordnung eine optische Umlenkeinrichtung aufweist, die in Propagationsrichtung des Lichtes in der Lichtleiteranordnung gesehen zwischen der Einkoppelanordnung und der Auskoppelanordnung angeordnet und dazu ausgebildet ist, von der Einkoppelanordnung mit unterschiedlichen Strahlwinkeln ausgehende und auf die Umlenkeinrichtung divergent einfallende Lichtstrahlenbündel gebündelt zur Auskoppelanordnung hin umzulenken, wobei die Umlenkeinrichtung Winkelspiegel aufweist.

Ein optisches System der eingangs genannten Art ist aus WO 2017/011333 A1 bekannt.

Ein derartiges optisches System wird beispielsweise in einem Anzeigesystem, wie einem HUD (head-up-display) oder HMD (head mounted display) verwendet. Ein HUD und ein HMD sind Anzeigesysteme, bei denen ein Quellbild in das Blickfeld des Nutzers projiziert wird. Das Quellbild kann dabei beispielsweise das Bild einer Anzeige, eines Fahrzeuginstruments, eines Mobiltelefons, einer Spielekonsole, eines Computers, ein Kamerabild und dergleichen sein. HUDs werden heutzutage beispielsweise in Flugzeugen und Kraftfahrzeugen eingesetzt, um dem Piloten bzw. Fahrer Informationen, beispielsweise Navigationsinformationen und dergleichen, in sein Sichtfeld zu projizieren, ohne dass der Pilot bzw. Fahrer seine Blickrichtung von der Geradeaus-Blickrichtung abwenden muss. Ein HMD wird im Unterschied zu einem HUD am Kopf des Nutzers getragen. Ein HMD präsentiert Bilder entweder auf einem augennahen Bildschirm oder projiziert sie direkt auf die Netzhaut. Andere Bezeichnungen für ein HMD sind auch Videobrille oder Datenbrille, Helmdisplay oder Virtual-Reality-Helm.

Die Hauptkomponenten solcher Anzeigesysteme sind eine Displayeinheit, die das Quellbild aus einer angeschlossenen Datenquelle liefert, und ein optisches System zum Übertragen des Quellbildes derart, dass ein Betrachter das Bild mit dem Auge wahrnehmen kann.

Wie in dem Dokument WO 2017/102795 A1 beschrieben, kann das optische System von solchen Anzeigesystemen als Bestandteile eine üblicherweise planare Lichtleiteranordnung, die einen oder mehrere Lichtleiter aufweist, in der Licht durch Totalreflexion an optischen Grenzflächen propagieren kann, eine optische Einkoppelanordnung, mit der das von dem Quellbild ausgehende Licht in die Lichtleiteranordnung eingekoppelt werden kann, und eine optische Auskoppelanordnung aufweisen, die die mittels Totalreflexion in der Lichtleiteranordnung geführte Bildinformation des Quellbildes aus der Lichtleiteranordnung auskoppelt. Bei kopfgetragenen Systemen lenkt die Auskoppelanordnung die Bildinformation bei der Auskopplung zum Auge des Betrachters, so dass das Licht des Quellbildes in ein oder beide Augen des Nutzers eintreten kann. Die Auskoppelanordnung liegt dabei folglich in der Nähe des Schnittpunktes der Hauptsehachse mit der Lichtleiteranordnung. Die Auskoppelanordnung kann hierbei die Funktion eines Strahlteilers haben, der die von der realen Umgebung ausgehende Information mit der virtuellen Bildinformation der Datenbrille überlagert (sogenanntes Augmented-Reality-System).

Bei optischen Systemen der eingangs genannten Art ist der durch die Lichtleiteranordnung transportierbare Winkelbereich des mittels der Einkoppelanordnung in die Lichtleiteranordnung eingekoppelten Lichtes limitiert, und zwar einerseits durch den brechzahlabhängigen Grenzwinkel der Totalreflexion und andererseits durch eine Propagation von Licht parallel zu den Grenzflächen der Lichtleiteranordnung (streifender Einfall, grazing incidence). Wird der Grenzwinkel der Totalreflexion überschritten, tritt ein Teil des Lichtes aus der Lichtleiteranordnung an einer falschen Stelle aus. Bei Propagation parallel zu den Grenzflächen erreicht ein Teil des Lichtes ebenfalls nicht die richtige Auskoppelstelle. Durch weitere Randbedingungen wie Fertigungs- und Justagetoleranzen wird die nutzbare Winkelbandbreite der Lichtübertragung durch die Lichtleiteranordnung weiter eingeschränkt. Stets besteht der Wunsch, die nutzbare Winkelbandbreite effizient für die Übertragung einer möglichst großen Bildinformation, d.h. ein großes Gesichtsfeld (Field of View, FOV) bzw. möglichst großes virtuelles Bild, einzusetzen.

Abhängig von der Art der Auskoppelanordnung und abhängig von der Brechzahl der Lichtleiteranordnung übersetzt sich die Winkelbandbreite des in der Lichtleiteranordnung propagierten Lichts in eine unterschiedliche Winkelbandbreite außerhalb der Lichtleiteranordnung. Grundsätzlich können mit Auskoppelanordnungen auf Spiegelbasis größere Winkelbandbreiten am Auge (d.h. außerhalb der Lichtleiteranordnung) des Betrachters realisiert werden als mit diffraktiven oder holografischen Auskoppelanordnungen. Auskoppelanordnungen auf Spiegelbasis bieten weiterhin den Vorteil, dass das Quellbild mit einer großen spektralen Bandbreite in einem einzelnen Lichtleiter der Lichtleiteranordnung übertragen werden kann. Der Grund hierfür ist, dass der Ablenkwinkel einer Spiegelschicht unabhängig von der Wellenlänge ist. Demgegenüber ist der Ablenkwinkel von Gittern und Hologrammen stark wellenlängenabhängig. Wenn diffraktive oder holografische Auskoppelanordnungen verwendet werden, ist daher vorgeschlagen worden, mehrere Wellenlängenbereiche (z.B. rot, grün, blau) zu definieren und pro Spektralbereich eine separate Auskoppelstruktur bereitzustellen, wie in dem eingangs genannten Dokument beschrieben ist. Bei diffraktiver Auskopplung kann die Lichtleiteranordnung auch für verschiedene Feldwinkelbereiche einen separaten Lichtleiter aufweisen.

Optischen Systemen zum Übertragen von Quellbildern der eingangs genannten Art ist gemeinsam, dass die dem Auge bereitgestellte Bildinformation, d.h. das übertragene Quellbild, an der richtigen Stelle der Auskoppelanordnung bereitgestellt werden muss, um das Auge des Betrachters zu erreichen. Dies führt jedoch zu folgendem technischen Problem. Betrachtet man den Lichtpfad in der umgekehrten Richtung, d.h. von der Augenpupille zur Auskoppelanordnung und von der Auskoppelanordnung zur Einkoppelanordnung, wächst die Lichtröhre stetig an, d.h. weitet sich stetig auf. Die Lichtröhre beschreibt in diesem Zusammenhang die Einhüllende aller Strahlen, die vom gesamten Quellbild ausgehen und die gesamte Pupille des optischen Systems abrastern. Da die Lichtröhre am Einkoppelbereich der Lichtleiteranordnung somit eine sehr große Ausdehnung aufweist, bedeutet dies, dass der Einkoppelbereich der Lichtleiteranordnung sehr groß sein muss. Eine vollständige Ausleuchtung eines sehr großflächigen Einkoppelbereichs der Lichtleiteranordnung mit einer Optik zwischen der Lichtleiteranordnung und dem Display ist jedoch schwierig und außerdem mit extremen Anforderungen an die Einkoppeloptik verbunden.

Das aus dem eingangs genannten Dokument bekannte optische System weist eine Umlenkeinrichtung auf, die einen Retroreflektor aufweist.

Aus dem Dokument US 2017/0235144 A1 ist ein optisches Übertragungssystem bekannt, das als holographische optische Vorrichtung mit "See-through"-Funktion ausgestaltet ist.

Der Erfindung liegt die Aufgabe zugrunde, ein optisches System der eingangs genannten Art dahingehend weiterzubilden, dass der Einkoppelbereich zum Einkoppeln des von dem Quellbild ausgehenden Lichtes in die Lichtleiteranordnung vergleichsweise klein und damit auch die Anforderungen an die Einkoppelanordnung gering gehalten werden können.

Erfindungsgemäß wird diese Aufgabe hinsichtlich des eingangs genannten optischen Systems dadurch gelöst, dass die Winkelspiegel entlang eines Kreislinienabschnitts angeordnet sind.

Bei dem erfindungsgemäßen optischen System wird das technische Problem eines nachteilig großen Einkoppelbereichs durch eine optische Umlenkeinrichtung gelöst, die in Lichtausbreitungsrichtung in der Lichtleiteranordnung gesehen zwischen der Einkoppelanordnung und der Auskoppelanordnung angeordnet ist. Betrachtet man wie oben beschrieben wiederum den Lichtpfad von der Augenpupille des Betrachters aus in Richtung Einkoppelanordnung, ergibt sich nun, dass die Lichtröhre ihre größte Ausdehnung an der Umlenkeinrichtung aufweist, da die Umlenkeinrichtung von der Einkoppelanordnung mit unterschiedlichen Strahl- bzw. Feldwinkeln divergent ausgehende Lichtstrahlenbündel zur Auskoppelanordnung hin bündelt. Von der Umlenkeinrichtung aus nimmt die Ausdehnung der Lichtröhre in Richtung zur Einkoppelanordnung hin wieder ab. Bei umgekehrter Verfolgung des Lichtpfades ergibt sich dasselbe. Die optische Umlenkeinrichtung ist in Lichtausbreitungsrichtung des Lichtes in der Lichtleiteranordnung zwischen der Einkoppelanordnung und der Auskoppelanordnung angeordnet, wobei dies beinhaltet, dass die Umlenkeinrichtung auch geometrisch zwischen der Einkoppelanordnung der Auskoppelanordnung angeordnet sein kann aber nicht muss, sondern sie kann auch in einem Bereich angeordnet sein, der geometrisch nicht zwischen der Einkoppelanordnung und der Auskoppelanordnung liegt, sondern jenseits derselben. Bei dem erfindungsgemäßen optischen System kann der Einkoppelbereich klein gehalten werden, und auch die Anforderungen an die Einkoppelanordnung sind entspannt.

Die Umlenkeinrichtung weist Winkelspiegel auf. Winkelspiegel, die aus zwei Planspiegeln aufgebaut sind, die dachförmig angeordnet sind, haben den Vorteil, dass ein einfallendes Strahlenbündel unabhängig von der Drehlage des Winkelspiegels um eine Drehachse senkrecht zum Hauptschnitt stets um den gleichen Winkel umgelenkt wird. Der Begriff Winkelspiegel setzt dabei nicht voraus, dass das gesamte als Winkelspiegel bezeichnete Element spiegelnde Eigenschaften besitzen muss. Es ist auch möglich, dass Teilbereiche der Fläche des Winkelspiegels nicht spiegelnd ausgeführt sind, beispielsweise im Bereich der Winkelspiegelspitze.

Die Winkelspiegel sind entlang eines Kreislinienabschnitts angeordnet. Die Winkelspiegel können so angeordnet bzw. orientiert sein, dass Schnittpunkte von auf die Winkelspiegel einfallenden und von denselben Winkelspiegeln reflektierten Lichtstrahlen auf einem Kreislinienabschnitt liegen.

Bei dieser Ausführungsform wird der Kreiswinkelsatz ausgenutzt, gemäß dem für zwei feste Punkte und einen dritten beweglichen Punkt, die alle auf einem Kreis liegen, der Innenwinkel am beweglichen dritten Punkt des aus den drei Punkten gebildeten Dreiecks unabhängig von der Position des Punktes auf der Kreislinie konstant bleibt.

Bei dieser Ausführungsform der Umlenkeinrichtung werden die divergent auf die Winkelspiegel der Umlenkeinrichtung einfallenden Lichtstrahlenbündel allesamt um einen im Wesentlichen gleichen Winkel umgelenkt, und zwar unabhängig von dem Strahlwinkel der einfallenden Lichtstrahlenbündel, unter dem sie auf die Umlenkeinrichtung einfallen.

In einer Ausführungsform ist die Umlenkeinrichtung dazu ausgebildet, die auf sie einfallenden Lichtstrahlenbündel so umzulenken, dass ein Winkel zwischen einfallendem und umgelenktem Lichtstrahlenbündel für alle Lichtstrahlenbündel zumindest näherungsweise gleich ist.

In dieser Ausgestaltung bewirkt die Umlenkeinrichtung eine Umkehrung der Strahl- bzw. Feldwinkelverteilung der einzelnen Lichtstrahlenbündel in der Lichtleiteranordnung. Der Winkel zwischen einfallendem und umgelenktem Lichtstrahlenbündel kann dabei ein spitzer Winkel oder ein stumpfer Winkel sein oder sogar 0° (genauer gesagt 180°) im Falle einer Retroreflexion an der optischen Umlenkeinrichtung betragen.

In einer weiteren Ausführungsform ist die Umlenkeinrichtung als Pupillen-Relaisoptik ausgebildet, die eine quellbildseitige Eintrittspupille auf eine augenseitige Austrittspupille abbildet.

Diese Ausführungsform ist im Sinne eines möglichst kleinen Einkoppelbereichs zum Einkoppeln des von dem Quellbild ausgehenden Lichtes in die Lichtleiteranordnung besonders vorteilhaft, insbesondere kann hierdurch der Einkoppelbereich besonders klein gehalten werden, insbesondere wenn das von dem Quellbild ausgehende Licht als paralleles Strahlenbündel auf den Einkoppelbereich gerichtet wird.

Vorzugsweise ist die Umlenkeinrichtung in die Lichtleiteranordnung eingebettet.

Fertigungstechnisch kann dies dadurch realisiert werden, dass die Umlenkeinrichtung bei der Herstellung der Lichtleiteranordnung, beispielsweise wenn diese aus Kunststoff geformt wird, im Herstellungsprozess der Lichtleiteranordnung vorgesehen werden kann.

In einer weiteren Ausführungsform ist die Umlenkeinrichtung vorzugsweise nahe einem Rand der Lichtleiteranordnung angeordnet.

Hierbei ist von Vorteil, dass die Umlenkeinrichtung das Blickfeld des Auges des Betrachters nicht stört.

Wenn das optische System am Kopf des Betrachters getragen wird, beispielsweise wenn das optische System in einer Daten- oder Videobrille eingesetzt wird, ist die Umlenkeinrichtung vorzugsweise am oberen, unteren, nasalen und/oder temporalen Rand der Lichtleiteranordnung angeordnet.

Weiter vorzugsweise können Scheitelabschnitte der Winkelspiegel abgeschnitten sein, und/oder es können nicht genutzte Bereiche der Winkelspiegel nicht reflektierend ausgebildet sein, beispielsweise durch eine Schwärzung oder eine andere geeignete Maßnahme. Die Scheitelabschnitte bzw. Spitzen der Winkelspiegel werden für die Umlenkung der auf sie einfallenden Lichtstrahlenbündel nicht benötigt. Durch Entfernen der Spitzen kann ein großer Anteil der Spiegelflächen der Winkelspiegel entfernt werden, wodurch die Winkelspiegel und damit die Umlenkeinrichtung an einem Rand der Lichtleiteranordnung relativ flach ausgebildet werden kann. Hierdurch wird der weitere Vorteil erreicht, dass die Umlenkeinrichtung auch bei einer stärkeren Augendrehung nicht im Blickfeld erscheint.

Durch eine nicht-reflektierende Ausbildung von nicht von den Lichtstrahlenbündeln genutzten Bereichen der Winkelspiegel können auch Einfach- oder mehr als zwei Reflexionen an den Winkelspiegeln vermieden werden, die zu Störlicht führen können.

Außerdem können zur Vermeidung von Störlicht bzw. Falschlicht durch mehr als zwei Reflexionen an den Winkelspiegeln winkelselektive Beschichtungen an den Winkelspiegeln vorgesehen werden.

Weiterhin ist es vorteilhaft, wenn die Winkelspiegel an ihrer Offenseite eine Mindestweite von 0,5 mm aufweisen. Vorzugsweise können die Winkelspiegel an ihrer Offenseite eine Mindestweite in einem Bereich von 0,5 mm bis 1 mm, weiter vorzugsweise in einem Bereich von 0,5 mm bis 1,5 mm aufweisen.

Wenn die Winkelspiegel eine zu geringe Größe aufweisen, kann es zu Auflösungsverlusten des optischen Systems kommen, wenn ein Lichtstrahlenbündel gleichzeitig auf unterschiedliche Winkelspiegel auftrifft und an diesen gebeugt wird.

Eine weitere Maßnahme zur Vermeidung von mehr als zwei Reflexionen an den Winkelspiegeln kann darin bestehen, die Orientierungen bzw. Drehlagen der Winkelspiegel untereinander so einzustellen, dass sie an die Strahl- bzw. Feldwinkel der einfallenden Lichtstrahlenbündel angepasst sind. Insbesondere kann hierdurch auch vermieden werden, dass ein Lichtstrahlenbündel an einem Winkelspiegel nur einmal reflektiert wird, was dann nicht zu der gewünschten Umlenkung des Lichtstrahlenbündels führt.

Bei der Ausgestaltung der Umlenkeinrichtung mit Winkelspiegeln funktioniert diese als Pupillen-Relaisoptik optimal, wenn die Schnittpunkte der auf die Winkelspiegel einfallenden und von denselben Winkelspiegeln reflektierten Lichtstrahlen auf einem Kreislinienabschnitt liegen. Ein leichter Versatz ist jedoch hinnehmbar und führt dazu, dass sich die zu den unterschiedlichen Feldwinkeln gehörenden Lichtstrahlenbündel nicht ganz genau an der Augenpupille des Betrachters schneiden.

In weiteren Ausführungsformen können die Winkelspiegel individuell in ihrer Größe variieren, verdreht oder in ihrer Lage verschoben sein.

Die Umlenkeinrichtung kann so ausgebildet sein, dass sie die auf sie einfallenden Lichtstrahlenbündel retroreflektiert. d.h. die Lichtstrahlenbündel eine Umlenkung von 180° erfahren. Ein Retroreflektor weist eine optische Struktur auf, die einen auf die optische Struktur einfallenden Lichtstrahl unabhängig vom Einfallwinkel in sich selbst zurückwirft. Für die vorliegende Erfindung wird jedoch abweichend von der klassischen 3-dimensionalen Retroreflektion eine Retroreflektion nur in zwei Dimensionen benötigt, und zwar in den zwei Dimensionen parallel zu den Grenzflächen der Lichtleiteranordnung, an denen das Licht bei der Propagation durch die Lichtleiteranordnung totalreflektiert wird. Beispiele für derartige Retroreflektoren sind die oben bereits erwähnten Winkelspiegel, wenn diese zwei Planspiegel aufweisen, die einen Winkel von 90° miteinander bilden.

Gemäß weiteren Ausführungsformen kann auch eine segmentierte Übertragung des zu übertragenden Quellbildes in Erwägung gezogen werden. So kann der Lichtübertragungskanal ein erster Lichtübertragungskanal zur Übertragung eines ersten Teilfeldes des Quellbildes sein, und die Lichtleiteranordnung kann einen zweiten Lichtübertragungskanal zur Übertragung eines zweiten Teilfeldes des Quellbildes aufweisen, wobei die Lichtleiteranordnung eine erste Umlenkeinrichtung und eine zweite Umlenkeinrichtung aufweist, wobei die erste Umlenkeinrichtung dem ersten Übertragungskanal und die zweite Umlenkeinrichtung dem zweiten Übertragungskanal zugeordnet ist.

In einer mehrkanaligen Lichtleiteranordnung können vorteilhafterweise größere Quellbilder übertragen werden als in einer einkanaligen Lichtleiteranordnung, da es bei einer mehrkanaligen Übertragung einzelner entsprechend kleinerer Teilfelder des Quellbildes zu weniger Feldbeschnitt kommt. Bei der vorstehend genannten Maßnahme wird somit das gesamte Feld des Quellbildes in kleinere Teilfelder aufgeteilt, die auf unterschiedlichen Pfaden zur Auskoppelanordnung geführt werden und sich nach Auskopplung zu dem Gesamtfeld ergänzen (sogenanntes ,field stitching'). Beispielsweise kann dies dadurch realisiert werden, dass im Fall eines kopfgetragenen optischen Systems der obere und untere Rand der Lichtleiteranordnung die jeweilige Umlenkeinrichtung aufweist, die jeweils mit unterschiedlichen Umlenkwinkeln ausgestaltet werden. Das optische System weist dann entsprechend zumindest zwei Einkoppelanordnungen und zumindest zwei Auskoppelanordnungen für die entsprechende Anzahl an Lichtübertragungskanälen auf. Die Lichtleiteranordnung selbst kann dagegen auch bei mehrkanaliger Übertragung nur einen einzelnen planaren Lichtleiter aufweisen, aber auch eine Mehrzahl aufeinander gestapelter Lichtleiter. Es versteht sich, dass die vorliegende Ausgestaltung auch eine segmentierte mehrkanalige Übertragung des zu übertragenden Quellbildes in mehr als zwei Lichtübertragungskanälen mit einer entsprechenden Aufteilung des Quellbildes in mehr als zwei Teilfelder umfassen kann.

In weiteren Ausführungsformen kann die Einkoppelanordnung des optischen Systems zumindest einen Spiegel oder eine diffrakte Struktur aufweisen. Die Einkoppelanordnung kann ein transmissives oder reflektives Beugungsgitter aufweisen, die die auf sie einfallenden Lichtstrahlenbündel so ablenkt, dass sie in der Lichtleiteranordnung durch Totalreflexion propagieren können. Die Einkoppelanordnung kann in die Lichtleiteranordnung eingebettet sein (transmissive oder reflektive Einkoppelanordnung), oder an der Lichteintrittsfläche (transmissive Einkoppelanordnung), oder an der der Lichteintrittsfläche gegenüberliegenden Fläche (reflektive Einkoppelanordnung). Im Falle der Ausgestaltung mit einem Spiegel ist dieser zur Flächennormalen der Lichtleiteranordnung geeignet verkippt und/oder um die Normale gedreht. Die Einkoppelanordnung kann auch ein oder mehrere Prismen und/oder Volumenhologramme aufweisen, wobei letztere einen Spezialfall diffraktiver Strukturen darstellen. Die Einkoppelanordnung hat die Funktion, die vom Quellbild ausgehenden Lichtstrahlenbündel beim Eintritt oder unmittelbar nach dem Eintritt in die Lichtleiteranordnung so abzulenken, dass die Lichtstrahlenbündel dann in der Lichtleiteranordnung unter Totalreflexion an den Grenzflächen der Lichtleiteranordnung (zumeist ein Übergang Luft/Material der Lichtleiteranordnung) propagieren können.

Das optische System kann ein Display, das das Quellbild bereitstellt, und eine Optik, vorzugsweise eine Kollimationsoptik, aufweisen, die das von dem Quellbild ausgehende Licht auf die Einkoppelanordnung, im Falle einer Kollimationsoptik als paralleles Lichtbündel, richtet.

Insbesondere die Einkopplung des von dem Quellbild ausgehenden Lichtes als paralleles Strahlenbündel ist in Verbindung mit der Ausgestaltung der Umlenkeinrichtung als Pupillen-Relaisoptik vorteilhaft. Hierbei kann die Eintrittspupille des Systems auf die Augenpupille des Betrachters abgebildet werden.

Vorteilhaft kann das optische System als Daten- oder Videobrille, Head-Mounted-Display (HMD) oder als Head-Up-Display (HUD) ausgebildet sein.

Weitere Vorteile und Merkmale der Erfindung ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1A und 1B: schematisch ein optisches System zum Übertragen eines Quellbildes, wobei Fig. 1A eine Ansicht auf das optische System von oben und Fig. 1B eine Ansicht von einem Betrachter aus zeigt, wenn das optische System am Kopf des Betrachters getragen wird;
- Fig. 2: einen Winkelspiegel zur Veranschaulichung der Strahlumlenkung eines Lichtstrahls an einem solchen Winkelspiegel;
- Fig. 3: drei Teilbilder zur Erläuterung des Kreiswinkelsatzes;
- Fig. 4: einen Lichtstrahlengang mit einer Umlenkung an einer Umlenkeinrichtung, die eine Mehrzahl von Winkelspiegeln aufweist, die entlang eines Kreislinienabschnitts angeordnet sind;
- Fig. 5: eine perspektivische Darstellung eines optischen Systems zur Übertragung eines Quellbildes mit einer Umlenkeinrichtung wie in Fig. 4;
- Fig. 6A und 6B: zwei Diagramme, die beispielhaft die Einkopplung von Licht in eine Lichtleiteranordnung mittels eines schrägstehenden Spiegels als Einkoppelanordnung (Fig. 6A) und mittels eines linearen Gitters (Fig. 6B) im Richtungskosinusraum veranschaulichen;
- Fig. 7A und 7B: zwei Diagramme, die die Strahlumlenkung innerhalb der Lichtleiteranordnung durch ein um eine Normale der Lichtleiteranordnung verdrehtes Gitter als Umlenkeinrichtung (Fig. 7A) und durch einen Spiegel oder Winkelspiegel an einem Rand der Lichtleiteranordnung (Fig. 7B) als Umlenkeinrichtung zeigen;
- Fig. 8A und 8B: ein erstes Ausführungsbeispiel eines optischen Systems zur Übertragung eines Quellbildes, wobei Fig. 8A die geometrische Anordnung von Teilen des Systems und Fig. 8B das zugehörige Diagramm der Quellbildübertragung im Richtungskosinusraum zeigen;
- Fig. 9A und 9B: ein weiteres Ausführungsbeispiel eines optischen Systems zum Übertragen eines Quellbildes, wobei Fig. 9A die geometrische Anordnung von Teilen des Systems und Fig. 9B das zugehörige Diagramm der Quellbildübertragung im Richtungskosinusraum zeigen;
- Fig. 10A bis 10C: ein weiteres Ausführungsbeispiel eines optischen Systems zum Übertragen eines Quellbildes, wobei Fig. 10A die geometrische Anordnung von Teilen des Systems und Fig. 10B das Diagramm der Übertragung eines ersten Teilfeldes des Quellbildes und Fig. 10C das Diagramm der Übertragung eines zweiten Teilfeldes des Quellbildes im Richtungskosinusraum zeigen;
- Fig. 11A und 11B: zwei Diagramme im Richtungskosinusraum für die Übertragung der beiden Teilfelder in einer Abwandlung des Ausführungsbeispiels in Fig. 10A bis 10C;
- Fig. 12A und 12B: ein weiteres Ausführungsbeispiel eines optischen Systems zum Übertragen eines Quellbildes mit einer Umlenkeinrichtung, die auf Retroreflexion basiert, wobei Fig. 12A das System in einer Ansicht von einem Betrachter aus und Fig. 12B das System in einer Ansicht von oben zeigt, wenn das optische System am Kopf des Betrachters getragen wird; und
- Fig. 13: ein weiteres Ausführungsbeispiel eines optischen Systems zum Übertragen eines Quellbildes in einer Abwandlung des Ausführungsbeispiels in Fig. 10A.

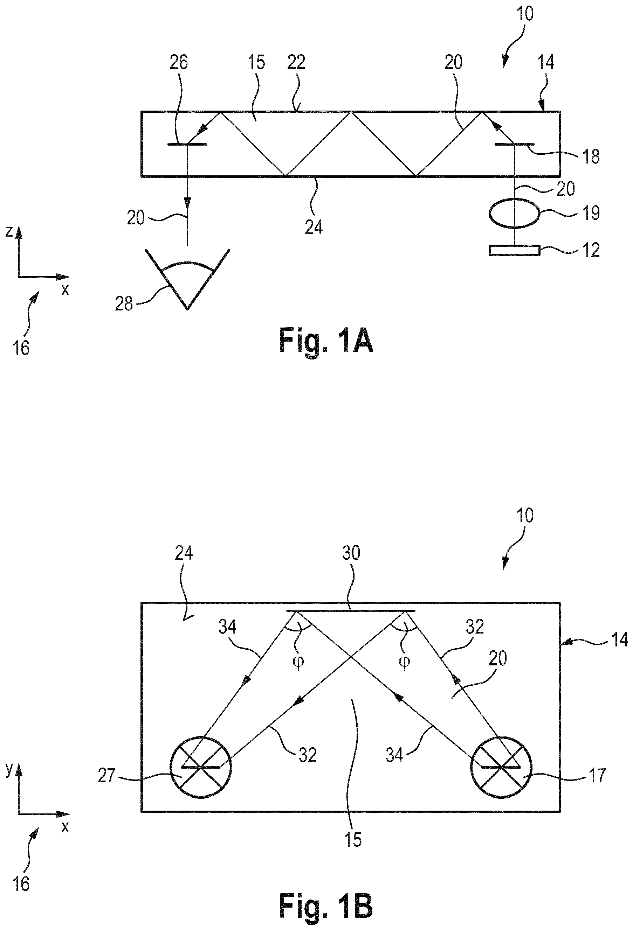

Fig. 1A und 1B zeigen schematisch Ansichten eines mit dem allgemeinen Bezugszeichen 10 versehenen optischen Systems zum Übertragen eines Quellbildes. Das optische System 10 kann insbesondere als Daten- oder Videobrille, Head-Mounted-Display (HMD) aber auch als Head-Up-Display (HUD) ausgebildet sein. Das Quellbild wird hier von einem Display 12, beispielsweise einem Mikro-Display, bereitgestellt. Das Quellbild kann ein Livebild oder eine Videosequenz einer Kamera oder ein Bild einer sonstigen Datenquelle sein.

Das optische System 10 weist eine Lichtleiteranordnung 14 auf. Die Lichtleiteranordnung 14 weist einen einzelnen optischen Wellenleiter auf. Die Lichtleiteranordnung 14 ist für Licht im sichtbaren Spektrum durchlässig und weist ein Material auf, das gegenüber Luft einen höheren Brechungsindex aufweist. Die Lichtleiteranordnung 14 definiert einen Lichtübertragungskanal 15 zum Übertragen des von dem Quellbild (Display 12) ausgehenden Lichtes.

Das von dem bildgebenden Display 12 ausgehende Licht wird über eine Optik 19, insbesondere eine Kollimationsoptik, auf die Einkoppelanordnung 18 gerichtet. Wenn die Optik 19 eine Kollimationsoptik ist, fällt das vom Quellbild ausgehende Licht als paralleles Lichtstrahlenbündel auf die Lichtleiteranordnung 14 ein.

Zur Vereinfachung der Beschreibung von Richtungen im Raum ist in Fig. 1A und 1B jeweils ein Koordinatensystem 16 eingezeichnet. Zur Vereinfachung des Verständnisses bezeichnet in der nachfolgenden Beschreibung die x-Achse die horizontale Richtung senkrecht zur Blickrichtung des Betrachters, und die y-Achse die vertikale Richtung, wenn das optische System 10 am Kopf eines Betrachters getragen wird. Die z-Achse bezeichnet dabei die vom Betrachter wegzeigende Normale der Lichtleiteranordnung.

Das optische System 10 weist eine optische Einkoppelanordnung 18 auf, mittels der von dem Quellbild ausgehendes Licht 20 in die Lichtleiteranordnung 14 eingekoppelt wird, so dass das Licht in der Lichtleiteranordnung 14 unter Totalreflexion propagieren kann. Die Einkoppelanordnung 18 kann eine diffraktive optische Anordnung, worunter auch eine Anordnung mit Volumenhologrammen zu verstehen ist, oder eine reflektive optische Anordnung oder Struktur aufweisen, die die auf sie einfallenden Lichtstrahlenbündel so ablenkt, dass sie in der Lichtleiteranordnung durch Totalreflexion propagieren können. Die Einkopplung ist somit als eine solche Ablenkung zu verstehen. Die Einkoppelanordnung 18 definiert einen Einkoppelbereich 17. Von dem Quellbild (Display 12) ausgehendes Licht 20 weist ein Feldwinkelspektrum in der xy-Ebene auf, das durch die Geometrie und Abmessungen des Quellbildes bedingt ist. Beispielsweise kann das vom Quellbild ausgehende Licht ein rechteckförmiges Feldwinkelspektrum aufweisen, beispielsweise mit 49° vertikalem Feld (y-Achse) und 27° horizontalem Feld (x-Achse).

Das über die Einkoppelanordnung 18 im Einkoppelberich 17 in die Lichtleiteranordnung 14 eingekoppelte Licht 20 propagiert dann in der Lichtleiteranordnung 14 von der Einkoppelanordnung 18 aus durch Totalreflexion an Grenzflächen 22 und 24 der Lichtleiteranordnung 14. Die Propagation des Lichtes 20 in der Lichtleiteranordnung 14 durch Totalreflexion bedingt, dass nur Lichtstrahlenbündel des Lichts 20, die auf die Grenzflächen 22, 24 unter einem Einfallswinkel einfallen, der größer ist als der Grenzwinkel der Totalreflexion, aber kleiner als 90°. Wegen fertigungsbedingter und justagebedingter Toleranzen sollte zu den Grenzen ein Abstand von etwa 5° eingehalten werden.

Das optische System 10 weist weiterhin eine optische Auskoppelanordnung 26 auf, die einen Auskoppelbereich definiert, mittels der das in der Lichtleiteranordnung 14 propagierte Licht aus der Lichtleiteranordnung 14 zu einem Auge 28 hin ausgekoppelt wird, so dass das übertragene Quellbild von einem Betrachter wahrgenommen werden kann.

Die Einkoppelanordnung 18 und die Auskoppelanordnung 16 sind in Fig. 1A als in die Lichtleiteranordnung 14 eingebettete Strukturen gezeigt, sie können sich jedoch auch an einer oder beiden der Grenzflächen 22 und 24 befinden. Die Einkoppelanordnung 18 kann ein transmissives oder reflektives Beugungsgitter aufweisen. Die Einkoppelanordnung 18 kann alternativ oder zusätzlich ein oder mehrere Volumenhologramme oder einen oder mehrere Fresnelspiegel aufweisen. In weiteren Varianten sind auch ein auf die Lichtleiteranordnung 14 aufgesetztes Prisma oder ein speziell gestalteter Randbereich der Grenzfläche 22 oder 24 denkbar, beispielsweise mit Freiformprismen mit kollimierender Wirkung. Allgemein lassen sich solche speziell gestalteten Randbereich dadurch characterisieren, dass die Grenzfläche 22 oder 24 im Einkoppelbereich eine andere Orientierung/Flächennormale aufweist als im übrigen Bereich der Lichtleiteranordnung 14. Die Einkoppelanordnung 18 kann in die Lichtleiteranordnung eingebettet sein (transmissive oder reflektive Einkoppelanordnung), oder an der Lichteintrittsfläche 24 (transmissive Einkoppelanordnung), oder an der der Lichteintrittsfläche gegenüberliegenden Fläche 22 (reflektive Einkoppelanordnung). Im Falle der Ausgestaltung der Einkoppelanordnung 18 mit einem Spiegel, der gegebenenfalls segmentiert ist, wie beispielsweise ein Fresnelspiegel, ist dieser zur Flächennormalen der Lichtleiteranordnung geeignet verkippt und/oder um die Normale gedreht. Die Einkoppelanordnung 18 hat die Funktion, die vom Quellbild ausgehenden Lichtstrahlenbündel beim Eintritt oder unmittelbar nach dem Eintritt in die Lichtleiteranordnung 14 so abzulenken, dass die Lichtstrahlenbündel dann in der Lichtleiteranordnung 14 unter Totalreflexion an den Grenzflächen 22, 24 der Lichtleiteranordnung 14 (beispielsweise Luft/Glas- oder Luft/Kunststoff-Übergang) propagieren können. Die Auskoppelanordnung 26 kann ebenso reflektiv oder transmissiv ausgebildet sein, ein Beugungsgitter oder einen oder mehrere Spiegel aufweisen, der bzw. die insbesondere als Strahlteiler wirken, so dass der Betrachter nicht nur das Quellbild, sondern auch die reale Umgebung durch die Lichtleiteranordnung 14 mit überlagertem Quellbild durch den Auskoppelbereich 27 hindurch wahrnehmen kann (Augmented Reality genannt).

In Fig. 1A ist vom Quellbild ausgehend nur ein einzelner repräsentativer Lichtstrahl gezeigt, um die Darstellung zu vereinfachen. Es versteht sich jedoch, dass das von dem Quellbild (Display 12) ausgehende Licht ein zweidimensionales Feld von Lichtstrahlenbündeln ist.

Die Lichtleiteranordnung 14 weist weiterhin eine optische Umlenkeinrichtung 30 auf, die in Propagationsrichtung des Lichtes 20 in der Lichtleiteranordnung 14 gesehen zwischen der Einkoppelanordnung 18 und der Auskoppelanordnung 26 angeordnet ist. Die Umlenkeinrichtung 30 ist dazu ausgebildet, von der Einkoppelanordnung 18 mit unterschiedlichen Strahl- bzw. Feldwinkeln ausgehende und auf die Umlenkeinrichtung 30 divergent einfallende Lichtstrahlenbündel zur Auskoppelanordnung 26 hin gebündelt umzulenken. In Fig. 1B sind zwei Randstrahlen 32 und 34 eingezeichnet, die in der xy-Ebene die Einhüllende der Lichtstrahlenbündel (auch als Lichtröhre bezeichnet) darstellen. Die Lichtröhre weist an der Umlenkeinrichtung 30 ihre größte Spreizung bzw. Weite auf. Von der Umlenkeinrichtung 30 aus nimmt die Spreizung bzw. Weite der Lichtröhre (Randstrahlen 32, 34) zur Auskoppelanordnung 26 hin wieder ab. Die Umlenkeinrichtung 30 bewirkt somit, dass die geometrische Ausdehnung der Einkoppelanordnung 18 klein gehalten werden kann, und dies großem Gesichtsfeld des übertragenen Quellbildes.

Die Umlenkeinrichtung 30 kann insbesondere so ausgebildet sein, dass die auf sie einfallenden Lichtstrahlenbündel unabhängig von ihrem Feldwinkel stets um den gleichen Winkel ϕ umgelenkt werden.

Des Weiteren kann die Umlenkeinrichtung insbesondere als Pupillen-Relaisoptik ausgebildet sein, die eine quellbildseitige Eintrittspupille, beispielsweise die Eintrittspupille der Optik 19, auf eine betrachterseitige Austrittspupille, beispielsweise die Augenpupille des Betrachters, abbildet, wie nachstehend noch beschrieben wird.

Die Umlenkeinrichtung 30 kann eine reflektive oder diffraktive optische Struktur oder eine Kombination aus einer reflektiven und diffraktiven Struktur aufweisen. Der Begriff "diffraktive Struktur" umfasst nicht nur Beugungsgitter, sondern auch holographisch-optische Elemente, insbesondere holographische Spiegel, insbesondere Volumenhologramme.

Die Umlenkeinrichtung 30 kann Oberflächengitter, Spiegel, Volumenhologramme aufweisen, kann aber auch Kombinationen derartiger Strukturen bzw. Elemente aufweisen.

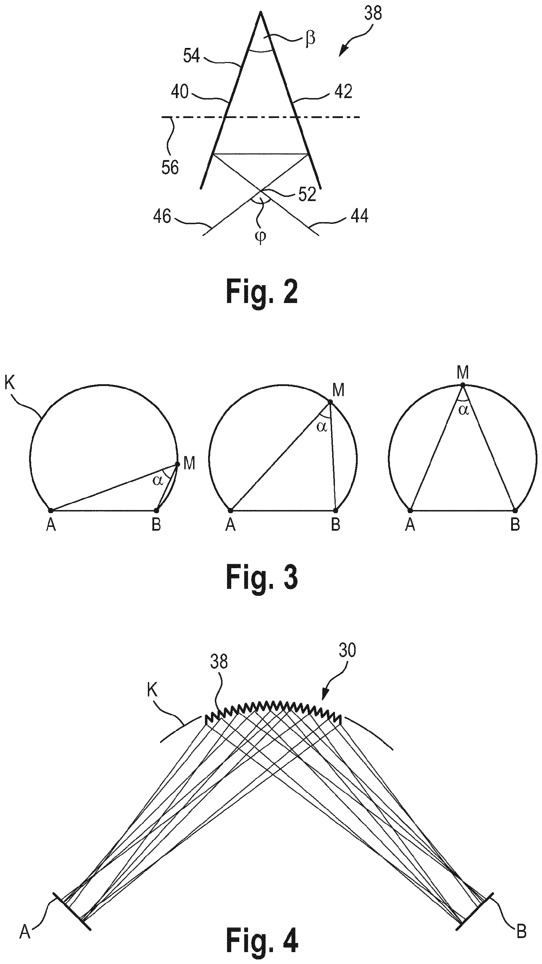

Nachfolgend wird eine Ausgestaltung der Umlenkeinrichtung 30 mit einer reflektiven optischen Struktur beschrieben. Eine optische Struktur, die sich für die Umlenkeinrichtung 30 gut eignet, ist eine Struktur aus einer Mehrzahl von Winkelspiegeln. In Fig. 2 ist ein einzelner Winkelspiegel 38 gezeigt. Der Winkelspiegel 38 weist zwei Planspiegel 40 und 42 auf, die dachförmig unter einem Winkel β zueinander geneigt sind. Unabhängig von dem Winkel β besitzt der Winkelspiegel 38 hinsichtlich der Strahlumlenkung eine Invarianz bezüglich einer Drehung um eine Achse senkrecht zum Hauptschnitt, d.h. um eine Achse senkrecht zur Zeichenebene in Fig. 2. In Fig. 2 ist ein einfallender Lichtstrahl 44 gezeigt, der auf den Planspiegel 40 einfällt, von diesem zu dem Planspiegel 42 reflektiert wird, und von diesem in einen ausfallenden Lichtstrahl 46 reflektiert wird. Ein Umlenkwinkel ϕ zwischen dem einfallenden Lichtstrahl 44 und dem ausfallenden Lichtstrahl 46 ist unabhängig von der Drehlage des Winkelspiegels 38 um eine Achse senkrecht zur Zeichenebene stets gleich groß und beträgt ϕ = 180° - 2β.

Des Weiteren kann man sich für die Ausgestaltung der Umlenkeinrichtung 30 den Kreiswinkelsatz zunutze machen, der in Fig. 3 veranschaulicht ist. Gemäß dem Kreiswinkelsatz bleibt für statische Punkte A und B und einen beweglichen Punkt M, die alle auf einem Kreis K liegen, der Innenwinkel α am Punkt M des Dreiecks ABM unabhängig von der Position des Punktes M auf der Kreislinie konstant, wie für drei Positionen des Punktes M in Fig. 3 gezeigt ist.

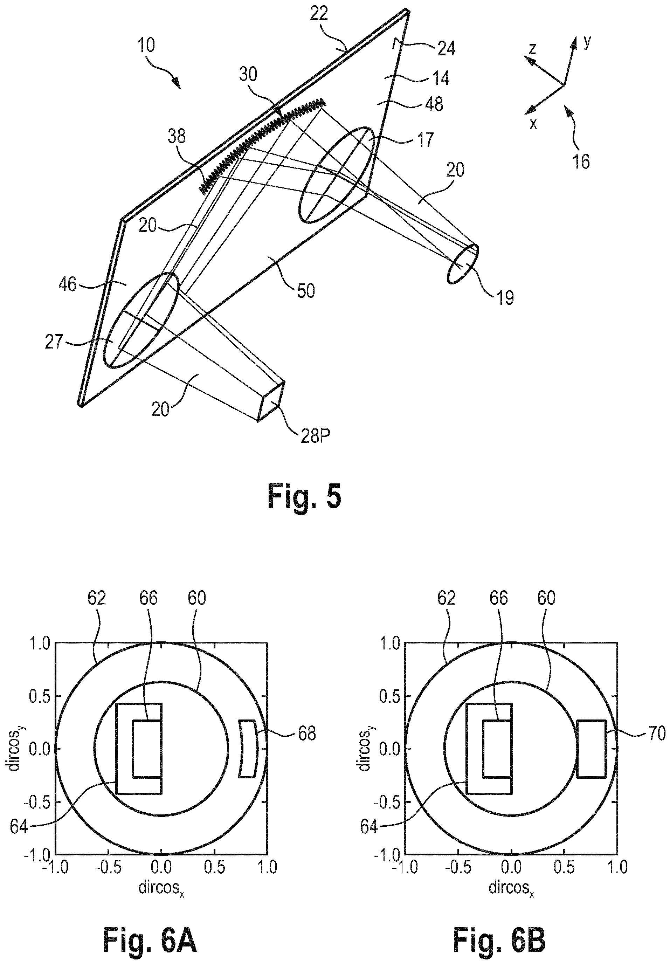

Fig. 4 zeigt nun eine Ausgestaltung der Umlenkeinrichtung 30, bei der die Umlenkeinrichtung 30 eine Mehrzahl an Winkelspiegeln 38 aufweist, die miniaturisiert ausgebildet sein können, wobei die Winkelspiegel 38 entlang einer Kreislinie K angeordnet sind. Somit werden alle von einem Bereich A ausgehenden Lichtstrahlenbündel in einen Bereich B umgelenkt. Wird nun die Pupille der Optik 19 in Fig. 1A in den Bereich A gelegt, während die Pupille des Auges 28 im Bereich B liegt, und wird der Bereich B über die Einkoppelanordnung 18 in den Freiraum außerhalb der Lichtleiteranordnung 14 und der Bereich A über die Auskoppelanordnung 26 in den Freiraum außerhalb der Lichtleiteranordnung 14 verlegt, kann eine Pupillen-Relaisoptik geschaffen werden, die die Pupille der Optik 19 in Fig. 1A auf die Pupille des Auges 28 abbildet. Dies ist in Fig. 5 dargestellt, die das optische System 10 mit der Lichtleiteranordnung 14, dem Einkoppelbereich 17 der Lichtleiteranordnung 14, dem Auskoppelbereich 27 der Lichtleiteranordnung 14 und der Umlenkeinrichtung 30 der Lichtleiteranordnung 14 zeigt, wobei die Umlenkeinrichtung 30 eine Mehrzahl an Winkelspiegeln 38 aufweist, die wie in Fig. 4 gezeigt auf einer Kreislinie angeordnet sind. Hierdurch kann die Pupille der Optik 19 auf die Pupille 28P des Auges 28 abgebildet werden.

Die Umlenkeinrichtung 30 kann in die Lichtleiteranordnung 14 eingebettet sein. Dabei kann die Lichtumlenkeinrichtung 30 vorzugsweise nahe einem Rand der Lichtleiteranordnung 14 angeordnet sein, wie in Fig. 1B und 5 gezeigt ist. Fig. 5 zeigt eine Anordnung der Umlenkeinrichtung 30 am oberen Rand der Lichtleiteranordnung 14, wenn das optische System 10 am Kopf eines Betrachters getragen wird. Die Umlenkeinrichtung 30 kann jedoch, wie in weiteren Ausführungsbeispielen später beschrieben wird, auch am nasalen Rand 46, am temporalen Rand 48 (schläfenseitig) oder am unteren Rand 50 angeordnet sein. Im Falle einer Ausgestaltung der Umlenkeinrichtung 30 mit Winkelspiegeln 38 wie in Fig. 5 gezeigt, arbeitet die Umlenkeinrichtung 30 optimal als Pupillen-Relaisoptik, wenn Schnittpunkte 52 (siehe Fig. 2) von auf die Winkelspiegel 38 einfallenden und von dem jeweiligen selben Winkelspiegel 38 reflektierten Lichtstrahlen 44, 46 (siehe Fig. 2) auf dem Kreislinienabschnitt K liegen. Ein leichter Versatz ist jedoch hinnehmbar und führt dazu, dass sich die zu den unterschiedlichen Feldwinkeln des Feldwinkelspektrums gehörenden Lichtstrahlenbündel nicht ganz genau an der Augenpupille 28P schneiden.

Je nach Einfallswinkel der Lichtstrahlenbündel des Lichts 20 auf die Winkelspiegel 38 kann es zu nur einer oder mehr als zwei Reflexionen am jeweiligen Winkelspiegel 38 kommen, was zu Störlicht führen kann. Dieser störende Effekt kann zumindest dadurch reduziert werden, dass die Drehung der Winkelspiegel 38 gezielt an die Richtung der einfallenden Lichtstrahlenbündel angepasst wird. Die Drehwinkel der Winkelspiegel 38 weisen vorzugsweise untereinander unterschiedliche Drehwinkel auf, wie in Fig. 5 zu sehen ist.

Betrachtet man wieder Fig. 2, so ist zu erkennen, dass die Spitze bzw. der Scheitelbereich 54 des Winkelspiegels38 für die Strahlumlenkung nicht benötigt wird. Dieser Bereich der Winkelspiegel 38 kann daher abgeschnitten bzw. entfernt sein, wie mit einer Linie 56 in Fig. 2 angedeutet ist. Dies hat den Vorteil, dass die gesamte Umlenkeinrichtung 30 im Randbereich der Lichtleiteranordnung 14 relativ flach ausgebildet werden kann.

Es versteht sich, dass die Winkelspiegel 38 individuell in ihrer Größe variiert, verdreht, oder in ihrer Lage verschoben sein können.

Zur Vermeidung von Falschlicht durch eine falsche Anzahl an Reflexionen an den Winkelspiegeln können ggf. winkelselektive Beschichtungen auf den Winkelspiegeln vorgesehen sein. Ggf. können die nicht genutzten Bereiche der Winkelspiegel 38 und auch die ggf. vorhandene Schnittflächen, an denen die Spitzen abgeschnitten wurden, geschwärzt werden.

Die Größe der Winkelspiegel, d.h. die Weite der Winkelspiegel 38 an ihrer offenen Seite sollte nicht zu klein sein, um Beugungseffekte durch die Winkelspiegel 38 zu vermeiden, die zu Auflösungsverlusten der Quellbildübertragung in das Auge des Betrachters führen können. Daher ist es vorteilhaft, wenn die Winkelspiegel 38 an ihrer Offenseite eine Mindestweite von 0,5 mm aufweisen.

Die Umlenkeinrichtung 30 kann auch eine Kombination aus Planspiegeln und Winkelspiegeln aufweisen.

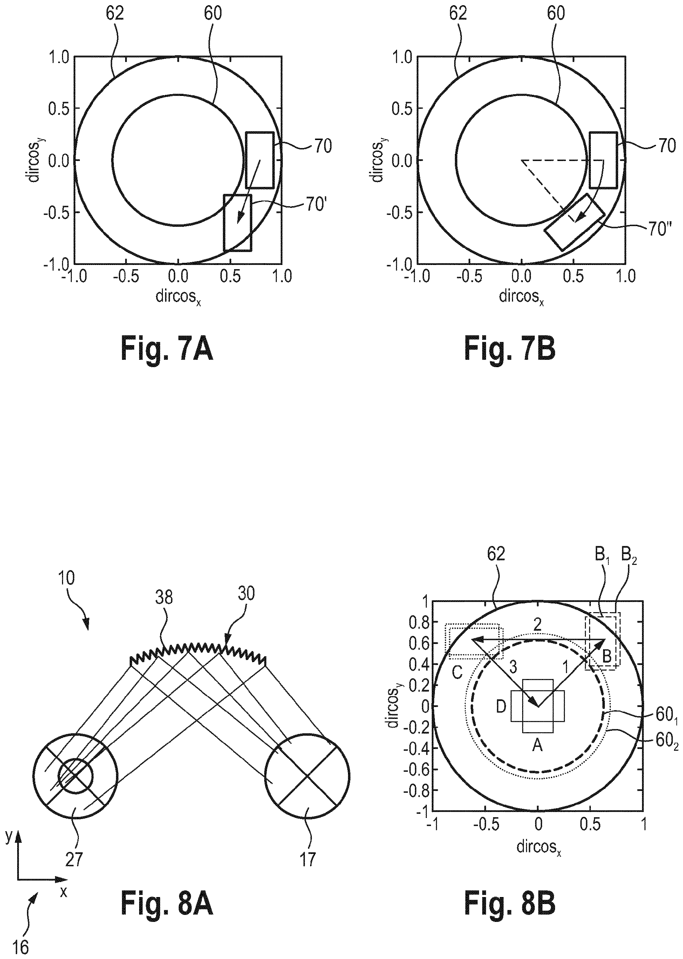

Nachfolgend wird mit Bezug auf die weiteren Figuren 6A, 6B, 7A, 7B und unter Beibehaltung der Bezugszeichen aus Fig. 1A und 1B beschrieben, welches Gesichtsfeld durch ein optisches System mit einer Umlenkeinrichtung erzeugt werden kann. Hierfür sind Darstellungen im Richtungskosinusraum (oder auch im k-Raum) geeignet. Ein Richtungskosinusdiagramm illustriert die Lichtstrahlrichtungen durch Darstellung der Komponenten ihres Richtungsvektors. Der Richtungskosinusvektor hat eine Länge von eins. Die Summe aller möglichen Lichtstrahlrichtungen ist somit durch eine Kugel symbolisiert (auch Ewald-Kugel genannt). Bei Kenntnis der Komponenten dircosₓ und dircos_{y} des Richtungskosinusvektors kann die dritte Komponente dircos_{z} über dircos_{z} = (dircosₓ² + dircos_{y}²)^{1/2} berechnet werden. Damit genügt eine zweidimensionale Darstellung in der Ebene dircosₓ-dircos_{y} für die Betrachtung der Propagation des Lichtes in der Lichtleiteranordnung.

Wenn das von dem Quellbild, d.h. von dem bildgebenden Display 12, ausgehende Licht auf die Lichtleiteranordnung 14 einfällt, tritt zunächst eine Brechung des Lichtes an der Grenzfläche 24 (siehe Fig. 1A) auf (es sei denn die Einkoppelanordnung 18 sitzt genau an der Lichteintrittsfläche 24, so dass die Strahlablenkung an der Einkoppelanordnung 18 der dominierende Effekt ist). Durch die höhere Brechzahl der Lichtleiteranordnung 14 werden die Lichtstrahlen zur Flächennormalen der Grenzfläche 24 hin gebrochen und der von den Lichtstrahlen genutzte Winkelbereich reduziert sich entsprechend. An der Einkoppelanordnung 18 werden die Lichtstrahlen dann weiter abgelenkt.

Fig. 6A und 6B zeigen Richtungskosinusdiagramme, die den Eintritt des Lichtes in die Lichtleiteranordnung 14 und die Ablenkung der Lichtstrahlen an der Einkoppelanordnung 18 für zwei unterschiedliche Ausgestaltungen von Einkoppelanordnungen, nämlich einer Einkoppelanordnung, die durch einen schrägstehenden Spiegel (nicht dargestellt) gebildet ist (Fig. 6A), und einer Einkoppelanordnung, die ein lineares Beugungsgitter an der Grenzfläche 22 der Lichtleiteranordnung 14 aufweist.

In den Diagrammen gemäß Fig. 6A und 6B bezeichnen dircos_{y} den Richtungskosinus der Lichtstrahlenbündel mit der y-Achse, und dircosₓ den Richtungskosinus der Lichtstrahlenbündel mit der x-Achse.

In Fig. 6A und 6B beschreibt ein innerer Kreis 60 im Richtungskosinusraum den Grenzwinkel der Totalreflexion, und ein äußerer Kreis 62 den Winkel eines streifenden Einfalls (90° zur Flächennormale) auf die Grenzflächen 22 bzw. 24 der Lichtleiteranordnung 14. In der Lichtleiteranordnung 14 können nur Lichtstrahlen mit einem Strahl- bzw. Feldwinkel propagieren, der zwischen den Kreisen 60 und 62 liegt.

Fig. 6A und 6B zeigen weiterhin mit einem großen Rechteck 64 eine rechteckförmige Strahl- bzw. Feldwinkelverteilung (Feldwinkelspektrum) des von dem Quellbild ausgehenden Lichtes 20 vor dessen Einfall in die Lichtleiteranordnung 14. Ein kleineres Rechteck 66 in Fig. 6A und 6B zeigt im Richtungskosinus-Raum die Strahl- bzw. Feldwinkelverteilung des Lichtes nach Brechung an der Eintrittsgrenzfläche (Grenzfläche 24 in Fig. 1A) in der Lichtleiteranordnung 14. Beispielhaft ist hier ein Quellbild mit einem Feld von 25° in der Horizontalen (x-Richtung) und 50° in der Vertikalen (y-Richtung) gezeigt. Wie bereits oben erwähnt, verringert sich das Feldwinkelspektrum aufgrund der Brechung beim Eintritt in die Lichtleiteranordnung 14, wie ein Vergleich der Rechtecke 64 und 66 ergibt.

Die Einkoppelanordnung 18 bewirkt nun eine Einkopplung des Lichtes in die Lichtleiteranordnung 14, gleichbedeutend mit einer Umsetzung der Feldwinkelverteilung, mit der das Licht in die Lichtleiteranordnung 14 eingetreten ist (Rechteck 66), zwischen die Kreise 60 und 62, wie in Fig. 6A mit einem Rahmen 68 und in Fig. 6B mit einem Rahmen 70 gezeigt ist. Fig. 6A beschreibt den Fall, dass die Einkoppelanordnung ein Spiegel ist, der gegenüber der Normalen der Lichtleiteranordnung um 25° verkippt ist und um die Normale der Lichtleiteranordnung 14 nicht verdreht ist. Fig. 6B beschreibt den Fall, dass die Einkoppelanordnung 18 ein lineares Gitter, mit einer Gitterperiode von 1,8 Linien pro µm und ohne Drehung des Gitters um die Normale der Lichtleiteranordnung 14, aufweist.

Damit die gesamte Bildinformation des Quellbildes durch Totalreflexion durch die Lichtleiteranordnung 14 zum Auge 28 des Betrachters geführt werden kann, müssen die Feldwinkelverteilungen (Rahmen 68 bzw. 70) der Lichtstrahlenbündel in der Lichtleiteranordnung 14 komplett zwischen die Kreise 60 und 62 für die Totalreflexion und den streifenden Einfall passen. Aufgrund von fertigungsbedingten Toleranzen und Justagetoleranzen sollten die beiden Grenzen nicht vollständig ausgenutzt werden.

Durch die Umlenkeinrichtung 30, die weitere Gitter oder Spiegel in der Lichtleiteranordnung 14 im Strahlengang des Lichtes 20 aufweisen kann, beispielsweise die Winkelspiegel 38, wie in Fig. 5 gezeigt, kann die Feldwinkelverteilung der Lichtstrahlenbündel in der Lichtleiteranordnung 14 effektiv umgelenkt werden. Der Effekt derartiger umlenkender Elemente ist in Fig. 7A und 7B veranschaulicht. Fig. 7A zeigt den Fall, dass die Umlenkeinrichtung 30 ein Gitter, das um die Normale der Lichtleiteranordnung 14 verdreht ist, aufweist. Ein solches Gitter führt zu einer Verschiebung der Feldwinkelverteilung (Rahmen 70) im Richtungscosinusraum, wie mit einem Rahmen 70' in Fig. 7A veranschaulicht ist.

Fig. 7B zeigt den Fall, dass die Umlenkeinrichtung 30 einen oder mehrere Spiegel aufweist, deren Normalenvektoren in der xy-Ebene, d.h. parallel zu den Grenzflächen 22 bzw. 24 liegen. Bei einer solchen Ausgestaltung der Umlenkeinrichtung 30 wird die in die Lichtleiteranordnung 14 eingekoppelte Feldwinkelverteilung (Rahmen 70) um den Ursprung des Richtungskosinusraums verdreht, wie mit einem Rahmen 70" in Fig. 7B veranschaulicht ist.

Fig. 7A veranschaulicht außerdem, dass das Feldwinkelspektrum der Lichtstrahlenbündel innerhalb der Lichtleiteranordnung 14 durch eine ungünstige Umlenkung durch die Umlenkeinrichtung 30 beschnitten werden kann, da Teile des Feldes durch Unterschreitung des Grenzwinkels der Totalreflexion an falscher Stelle der Lichtleiteranordnung 14 ausgekoppelt werden, oder Teile des Feldes mit streifendem Einfall in der Lichtleiteranordnung propagieren. Dies bedeutet also insgesamt, dass ein Teil des die Bildinformation tragenden Lichts an einer falschen Stelle aus der Lichtleiteranordnung ausgekoppelt wird und somit nicht das Auge des Betrachters erreicht, wodurch Bildinformation verloren geht.

Das Problem eines Beschnitts der Feldwinkelverteilung kann dadurch behoben werden, dass das Quellbild segmentiert übertragen wird, wie nachfolgend noch beschrieben wird.

Nachfolgend werden Ausführungsbeispiele für das optische System 10 beschrieben, wobei auch die spektrale Verteilung des Lichtes zumindest teilweise, nämlich für zwei Wellenlängen, berücksichtigt wird. Es werden nachfolgend jeweils zwei Wellenlängen des Lichtes betrachtet, die um 30 nm gegeneinander verschoben sind. Hierbei wird eine Wellenlänge im blauen Spektralbereich von 500 nm und eine Wellenlänge im grünen Spektralbereich von 530 nm berücksichtigt.

Fig. 8A zeigt ein Ausführungsbeispiel eines optischen Systems 10, das dem optischen System 10 in Fig. 5 entspricht, wobei die Lichtleiteranordnung in Fig. 8A nicht dargestellt ist, jedoch deren Einkoppelbereich 17 und Auskoppelbereich 27. Die Umlenkeinrichtung 30 weist Winkelspiegel 38 auf, die entlang eines Kreislinienabschnitts angeordnet sind, wie mit Bezug auf Fig. 4 und 5 beschrieben wurde.

Es wird angenommen, dass die Lichtleiteranordnung einen optischen Wellenleiter aus Polycarbonat mit einem Brechungsindex n₁ = 1,5922 bei einer Wellenlänge λ₁ = 530 nm und einem Brechungsindex n₂ = 1,5969 bei einer Wellenlänge λ₂ = 500 nm aufweist. Weiterhin wird angenommen, dass das Quellbild in Luft ein rechteckiges Feldwinkelspektrum mit 48° vertikalem Feld (y-Richtung) und 27° horizontalem Feld (x-Richtung) aufweist.

Fig. 8B zeigt das dazugehörige Richtungskosinusdiagramm der Quellbildübertragung für das optische System 10 in Fig. 8A.

In Fig. 8B ist mit A das rechteckförmige Feldwinkelspektrum des Quellbildes, wie es von dem Display 12 ausgeht, in Luft im Richtungskosinusraum gezeigt. Die Einkoppelanordnung weist ein unter 45° zur Flächennormalen der Lichtleiteranordnung stehendes Beugungsgitter auf. Die Einkopplung des Lichtes verschiebt das Feldwinkelspektrum gemäß einem Pfeil 1 in die rechte obere Ecke des Richtungskosinusraumes, wobei das verschobene Feldwinkelspektrum mit B bezeichnet ist. Aufgrund der Wellenlängenabhängigkeit der Beugung an der diffraktiven Einkoppelanordnung ergeben sich für die hier betrachteten, um 30 nm verschobenen Wellenlängen zwei geringfügig gegeneinander versetzte Feldwinkelverteilungen B₁ und B₂. In Fig. 8B sind zwei innere Kreise 60₁ und 60₂ gezeigt, wobei der Kreis 60₁ den Grenzwinkel der Totalreflexion und der Kreis 60₂ den Grenzwinkel der Totalreflexion abzüglich einer Toleranz von etwa 5° anzeigt.

Ein Pfeil 2 in Fig. 8B beschreibt die Wirkung der Umlenkeinrichtung 30 mit den Winkelspiegeln 38, die eine Drehung des Feldwinkelspektrums ausgehend von dem Zustand B um 90° in den Zustand C bewirkt, indem die auf die Umlenkeinrichtung 30 einfallenden Lichtstrahlenbündel um 90° umgelenkt werden. Die Drehung des Feldwinkelspektrums ergibt dabei nunmehr ein horizontales Feld von 48° und ein vertikales Feld von 27° (in Luft betrachtet). Gleichzeitig wird das Feldwinkelspektrum aus der rechten oberen Ecke des Richtungskosinusraums in die linke obere Ecke des Richtungskosinusraums verschoben.

Bei dem Ausführungsbeispiel in Fig. 8A weist die Auskoppelanordnung ein um 90° zum Beugungsgitter der Einkoppelanordnung verdrehtes Beugungsgitter auf. Dieses bewirkt gemäß einem Pfeil 3 eine Auskopplung des in der Lichtleiteranordnung propagierten Lichtes und überführt das Feldwinkelspektrum aus dem Zustand C in das Zentrum des Richtungskosinusraums, wie mit D bezeichnet ist. Da sich das Feldwinkelspektrum im Zustand D nicht mehr im Totalreflexionsbereich der Lichtleiteranordnung befindet, wird es aus der Lichtleiteranordnung in die Luft zum Auge des Betrachters ausgekoppelt. Das ausgekoppelte Licht weist ein Feldwinkelspektrum mit 27° vertikalem Feld und 48° horizontalem Feld auf.

Wie aus Fig. 8B hervorgeht, wird das ursprünglich in die Lichtleiteranordnung eingekoppelte Feldwinkelspektrum nur teilweise übertragen, da sowohl in den Zuständen D als auch C Teile des Feldwinkelspektrums außerhalb des Bereichs zwischen den Kreisen 60₁ und 62 liegen. Feldwinkelbereiche, die innerhalb des Kreises 60₁ liegen, werden an falscher Stelle der Lichtleiteranordnung ausgekoppelt, und Feldwinkelbereiche, die außerhalb des Kreises 62 liegen, werden ausgelöscht. Wie bereits oben erwähnt, kann dieses Problem durch eine Segmentierung des Quellbildes in mehrere Teilfelder und Übertragung der einzelnen Teilfelder in verschiedenen Lichtübertragungskanälen der Lichtleiteranordnung behoben werden, wie später noch beschrieben wird.

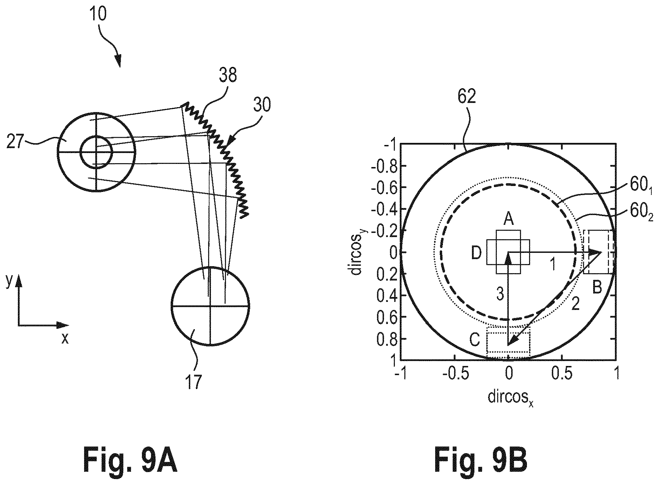

Fig. 9A zeigt ein weiteres Ausführungsbeispiel eines optischen Systems 10, wobei die Lichtleiteranordnung nicht gezeigt ist, sondern nur deren Einkoppelbereich 17, dem eine Einkoppelanordnung zugeordnet ist, und Auskoppelbereich 27, dem eine Auskoppelanordnung zugeordnet ist. Die Einkoppel- und Auskoppelbereiche 17, 27 sind bei diesem Ausführungsbeispiel vertikal (d.h. in y-Richtung) gegeneinander versetzt, und die Umlenkeinrichtung 30 ist gegenüber der Umlenkeinrichtung 30 in Fig. 8A verkippt angeordnet.

Es werden die gleichen Wellenlängen des Lichtes wie in Fig. 8A betrachtet.

Fig. 9B zeigt das dazugehörige Richtungskosinusdiagramm. Das Feldwinkelspektrum des Quellbildes, das wiederum rechteckförmig ist, wurde gegenüber dem Ausführungsbeispiel in Fig. 8A und 8B auf 37° vertikales Feld und 21° horizontales Feld mit einer Toleranz zum Grenzwinkel der Totalreflexion angepasst. In Fig. 9B bezeichnet wiederum eine Kreislinie 60₂ die Toleranz zum Grenzwinkel der Totalreflexion, der durch die Linie 60₁ dargestellt ist.

Das von dem Quellbild ausgehende Feldwinkelspektrum, das in Fig. 9B mit A bezeichnet ist, wird über die Einkoppelanordnung, die ein Einkoppelgitter mit vertikalen Gitterlinien (y-Richtung) aufweist, in die Lichtleiteranordnung eingekoppelt. Dies führt gemäß einem Pfeil 1 zu einer Verschiebung des Feldwinkelspektrums im Richtungskosinusraum auf die rechte Seite zwischen die Linien 60₂ und 62 (Zustand B). Wie aus Fig. 9B hervorgeht, tritt hierbei kein Feldbeschnitt auf.

Die Umlenkeinrichtung 30 dreht das Feldwinkelspektrum um 90° und verschiebt dieses gleichzeitig gemäß einem Pfeil 2 im Richtungskosinusraum nach unten (Zustand C). Auch hierbei tritt kein Feldbeschnitt auf.

In dem Ausführungsbeispiel weist die Auskoppelanordnung ein um 90° zum Beugungsgitter der Einkoppelanordnung verdrehtes Beugungsgitter mit horizontalen Gitterlinien auf. Dieses verschiebt das horizontal liegende Feldwinkelspektrum (Zustand C) in das Zentrum des Richtungskosinusraums (Zustand D).

Das Feldwinkelspektrum mit 21° vertikalem Feld und 37° horizontalem Feld befindet sich nun nicht mehr im Totalreflexionsbereich und wird aus der Lichtleiteranordnung 14 ausgekoppelt.

Bei diesem Ausführungsbeispiel wird das ursprüngliche Feldwinkelspektrum, das von dem Quellbild ausgeht, komplett übertragen.

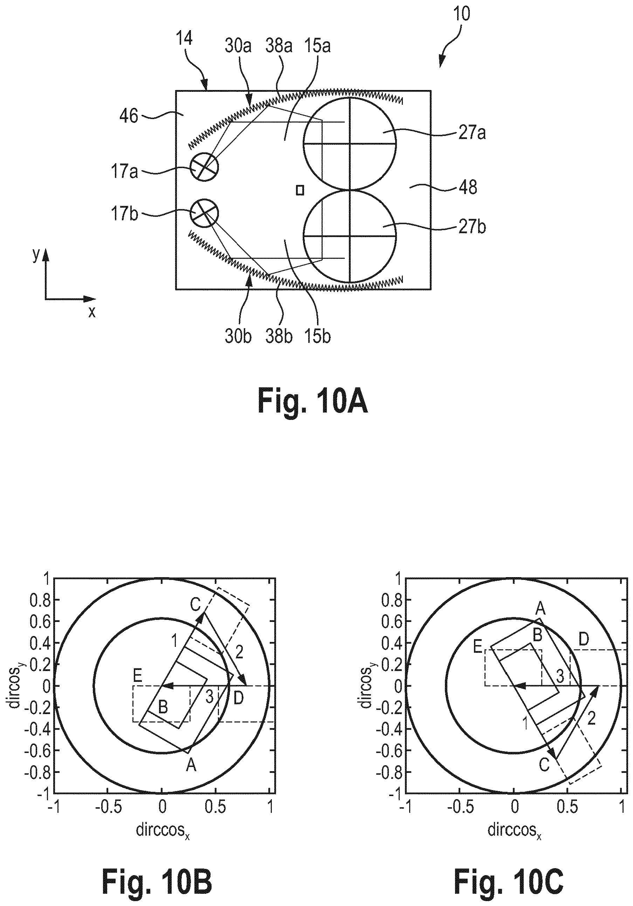

Fig. 10A zeigt ein Ausführungsbeispiel eines optischen Systems 10 zum Übertragen eines Quellbildes, dessen Lichtleiteranordnung 14 zwei Übertragungskanäle 15a und 15b aufweist, die in der vertikalen Richtung (y-Richtung) übereinander angeordnet sind. Der Lichtübertragungskanal 50a wird daher nachfolgend auch als oberer Lichtübertragungskanal und der Lichtübertragungskanal 50b als unterer Lichtübertragungskanal bezeichnet. Entsprechend der Anzahl an Lichtübertragungskanälen sind zwei Einkoppelbereiche 17a, 17b mit zugehörigen Einkoppelanordnungen und zwei Auskoppelbereiche 27a, 27b mit zugehörigen Auskoppelanordnungen vorhanden.

Die Lichtleiteranordnung 14 weist für die Lichtübertragungskanäle 15a und 15b jeweils eine Umlenkeinrichtung 30a bzw. 30b auf, die beide eine Mehrzahl an Winkelspiegeln 38a bzw. 38 aufweisen. Die Umlenkeinrichtungen 30a und 30b sind am oberen bzw. unteren Rand der Lichtleiteranordnung angeordnet. Die Lichtleiteranordnung 14 kann einen einzelnen optischen Wellenleiter aufweisen, in dem beide Lichtübertragungskanäle realisiert sind.

Fig. 10B zeigt das Richtungskosinusdiagramm für den oberen Lichtübertragungskanal 15a, und Fig. 10C das Richtungskosinusdiagramm für den unteren Lichtübertragungskanal 15b.

Das von dem Quellbild ausgehende rechteckförmige Feldwinkelspektrum wird in zwei Teilfelder aufgeteilt, von denen das eine über die Einkoppelanordnung 18a in die Lichtleiteranordnung 14 eingekoppelt wird, und das andere Teilfeld über die Einkoppelanordnung 18b.

Fig. 10B und Fig. 10C zeigen mit A den jeweiligen Teilbereich des Feldwinkelspektrums vor Einkopplung in die Lichtleiteranordnung 14. B bezeichnet das jeweilige rechteckige Feldwinkelspektrum, d.h. den jeweiligen Teilbereich des Feldwinkelspektrums, nach der Brechung in die Lichtleiteranordnung 14, bei der die Lichtstrahlenbündel zur Flächennormale hin gebrochen werden und die Ausdehnung des Feldwinkelspektrums im Richtungskosinusraum verringert wird.

Ein Pfeil 1 zeigt die Überführung des jeweiligen Teilbereichs des Feldwinkelspektrums in den Zustand C, wobei diese Überführung durch die Einkopplung des jeweiligen Teilbereichs des Feldwinkelspektrums an den Einkoppelanordnungen 18a und 18b erfolgt. Die Einkoppelanordnungen 18a und 18b weisen hier jeweils um 30° gegenüber der Horizontalen gedrehte Gitterlinien auf. Die Einkoppelanordnungen 18a und 18b setzen das jeweilige Feldwinkelspektrum nach außen in den Totalreflexionsbereich der Lichtleiteranordnung um, wobei hier in beiden Lichtkanälen ein Feldbeschnitt auftritt. Die jeweilige Umlenkeinrichtung 30a bzw. 30b dreht den jeweiligen Teilbereich des Feldwinkelspektrums um 60° und verschiebt diese, so dass das Feldwinkelspektrum gemäß Pfeil 2 in den Zustand D übergeht. Die Auskoppelanordnungen 26a und 26b, die jeweils ein Beugungsgitter mit vertikal stehenden Gitterlinien aufweisen, verschieben den jeweiligen Teilbereich des Feldwinkelspektrums gemäß Pfeil 3 in den Zustand E im Zentrum des Richtungskosinusraums. In den beiden Lichtübertragungskanälen 15a und 15b wird somit jeweils ein Teil des gesamten übertragenen Feldes übertragen, wobei sich diese beiden Teile nach Auskopplung aus der Lichtleiteranordnung randlos zu einem Gesamtfeld bzw. Gesamtfeldwinkelspektrum zusammensetzen. Dieses Gesamtfeld wird durch die Gesamtfläche der beiden Rechtecke bei E gebildet.

Bei dem Ausführungsbeispiel gemäß Fig. 10A bis 10C wird angenommen, dass die beiden Teilfelder des Quellbildes scharf aneinander grenzen, wenn sie aus der Lichtleiteranordnung 14 ausgekoppelt worden sind. Dies bedeutet, dass die Auskoppelbereiche der Lichtleiteranordnung 14 gemäß den Auskoppelanordnungen 18a und 18b scharf aneinander grenzen. Damit beispielsweise auch bei lateralen Verschiebungen des Auges 28 des Betrachters das gesamte Gesichtsfeld ohne Helligkeits- und Informationsverluste wahrgenommen werden kann, ist ein Überlapp der Bildinformationen in den einzelnen Lichtübertragungskanälen 15a und 15b vorteilhaft.

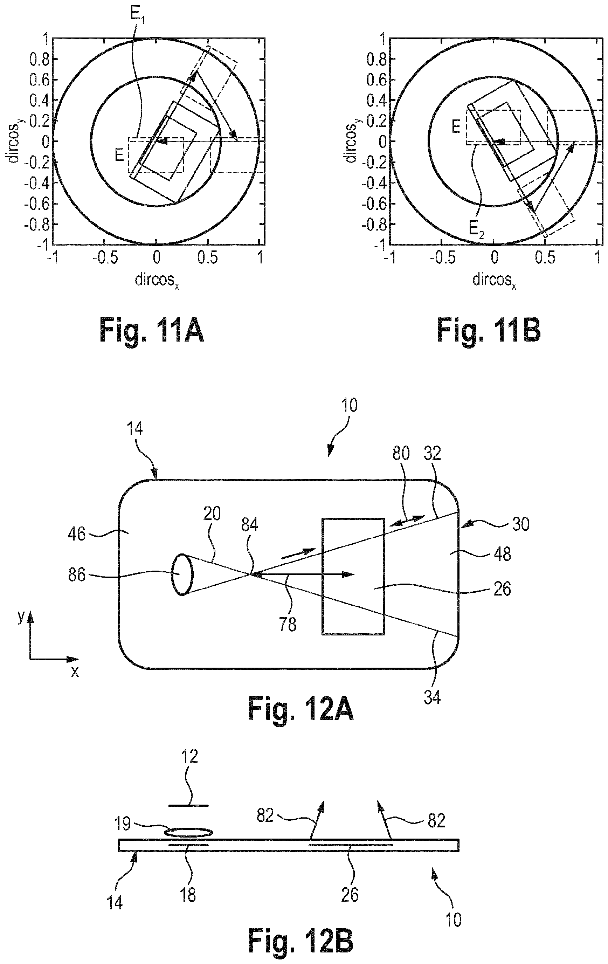

Fig. 11A und 11B zeigen hierzu zwei Richtungskosinusdiagramme eines gegenüber dem Ausführungsbeispiel in Fig. 10A bis 10C geringfügig abgewandelten Ausführungsbeispiels. Bei diesem Ausführungsbeispiel wird ein Überlappbereich zwischen den übertragenen Teilbereichen des Feldwinkelspektrums von beispielsweise 10° realisiert. Dies kann durch eine unterschiedliche Gitterperiode der Gitter (Einkoppelgitter bzw. Auskoppelgitter) für den oberen Lichtübertragungskanal 15a und den unteren Lichtübertragungskanal 15b realisiert werden. Der Überlappbereich der beiden Teilfelder im aus der Lichtleiteranordnung 14 ausgekoppelten Zustand E ist in Fig. 11A und 11B mit E₁ bzw. E₂ bezeichnet.

Fig. 12A und 12B zeigen ein weiteres Ausführungsbeispiel eines optischen Systems 10 zum Übertragen eines Quellbildes, das wiederum von einem Display 12 bereitgestellt wird. Über eine Optik 19, beispielsweise eine Kollimationsoptik, wird das von dem Quellbild ausgehende Licht in eine Lichtleiteranordnung 14 eingekoppelt. Die Lichtleiteranordnung 14 weist eine Umlenkeinrichtung 30 auf, die als 2-dimensionaler Retroreflektor ausgebildet ist und sich an einem seitlichen Rand 48 der Lichtleiteranordnung 14 befindet. Der seitliche Rand 48 kann dabei der nasale Rand der Lichtleiteranordnung 14 sein. Die Umlenkeinrichtung 30 bewirkt wiederum eine Bündelung der auf sie divergent einfallenden Lichtstrahlenbündel, wobei hier zwei Randstrahlen 32 und 34 des in der Lichtleiteranordnung 14 propagierenden Lichtes gezeigt sind, die die Einhüllende bzw. die Lichtröhre des Strahlengangs in der Lichtleiteranordnung 14 darstellen.

Die Einkopplung erfolgt bei diesem Ausführungsbeispiel im temporalen Randbereich der Lichtleiteranordnung 14. Das von dem Quellbild ausgehende Feldwinkelspektrum wird im Einkoppelbereich der Einkoppelanordnung 18, die ein Beugungsgitter mit horizontalen Gitterlinien aufweisen kann, so eingekoppelt, dass ein Zentrumsstrahl 78 des Feldwinkelspektrums horizontal in Richtung zur Umlenkeinrichtung 30 verläuft. Die Umlenkeinrichtung 30 wirft das Winkelspektrum in der xy-Ebene in sich zurück, wie mit einem Doppelpfeil 80 angedeutet ist. Von der Umlenkeinrichtung 30 wird das Licht 20 mit dem gesamten Feldwinkelspektrum auf die Auskoppelanordnung 26 gerichtet, die die Wirkung der Einkoppelanordnung 18 aufhebt, so dass das Licht mit dem Feldwinkelspektrum die Lichtleiteranordnung 14 in Richtung zum Auge des Betrachters verlässt, wie mit Pfeilen 82 veranschaulicht ist.

Bei der Einkopplung können unterschiedliche Pupillenlagen innerhalb oder außerhalb der Lichtleiteranordnung 14 gewählt werden. In Fig. 12A ist eine Variante gezeigt, bei der die Pupille der Einkoppelanordnung 18 in der Lichtleiteranordnung 14 liegt, wie hier durch einen Schnittpunkt 84 der beiden Linien von der Einkoppelellipse 86 veranschaulicht ist. Diese Pupille würde über den Retroreflektor der Umlenkeinrichtung 30 am nasalen Rand 48 der Lichtleiteranordnung 14 wieder in sich abgebildet. Durch die Auskoppelanordnung 26 wird das vom Retroreflektor zurücklaufende Lichtstrahlenbündel jedoch aus der Lichtleiteranordnung 14 herausgelenkt. Das Bild der Einkopplungspupille formt dann die Eyebox.

Bei diesem Ausführungsbeispiel kann der Abstand zwischen Lichtleiteranordnung 14 und Eyebox in einfacher Form durch die Variation der lateralen Lage (x-Richtung) der Einkoppelanordnung 18 bzw. durch den Abstand der Einkoppelpupille (Schnittpunkt 84) zur Auskoppelanordnung 26 eingestellt werden.

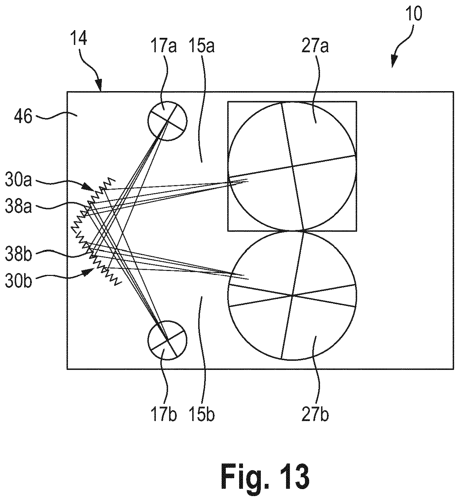

Fig. 13 zeigt ein weiteres Ausführungsbeispiel eines optischen Systems 10, das eine Abwandlung des in Fig. 10A bis 10C gezeigten Ausführungsbeispiels ist. Das optische System 10 zum Übertragen eines Quellbildes gemäß Fig. 13A weist ebenfalls zwei Lichtübertragungskanäle 15a und 15b in der Lichtleiteranordnung 14 auf, sowie für jeden Lichtübertragungskanal 15a bzw. 15b eine Umlenkeinrichtung 30a bzw. 30b, die jeweils Winkelspiegel 38a bzw. 38b aufweisen. Entsprechend der Anzahl an Lichtübertragungskanälen sind zwei Einkoppelbereiche 17a, 17b mit zugehörigen Einkoppelanordnungen und zwei Auskoppelbereiche 27a, 27b mit zugehörigen Auskoppelanordnungen vorhanden.

Im Unterschied zu dem Ausführungsbeispiel in Fig. 10A sind die beiden Umlenkeinrichtungen 30a und 30b nicht am oberen bzw. unteren Rand der Lichtleiteranordnung 14 angeordnet, sondern am temporalen Rand 46 der Lichtleiteranordnung 14.

Das Ausführungsbeispiel gemäß Fig. 13 kann auch mit einem einzelnen Lichtübertragungskanal 15 und einem Retroreflektor als Umlenkeinrichtung 30 ähnlich zu dem Ausführungsbeispiel in Fig. 12A und 12B aufgebaut sein, wobei sich der Retroreflektor in diesem Fall am temporalen Rand 46 der Lichtleiteranordnung 14 befände. Eine weitere Ausführungsvariante kann eine Umlenkeinrichtung 38a und 38b am temporalen und nasalen Rand der Lichtleiteranordnung 14 kombinieren, um so durch die Zusammenschaltung beider Lichtpfade 15a und 15b ein größeres Feld aufzuspannen.

Die Lichtleiteranordnung 14 kann anstatt gerade auch gekrümmt sein, entsprechend einer Krümmung, wie sie bei Brillengläsern üblicherweise vorhanden ist.

Die Umlenkeinrichtung 30 kann gemäß weiteren Ausführungsbeispielen ein oder mehrere holographisch-optische Elemente, insbesondere holographische Spiegel, insbesondere Volumenhologramme aufweisen. Beispielsweise kann ein gemultiplextes (d.h. mehrfach belichtetes) Volumenhologramm so ausgelegt werden, dass es für einen definierten Winkel- und Spektralbereich wie ein Spiegel wirkt. Es lassen sich auch holographische Spiegelflächen generieren, die senkrecht in der Lichtleiteranordnung 14stehen, d.h. die Normale des Spiegels steht senkrecht auf der Normale der Lichtleiteranordnung 14. Für Winkel- und Spektralbereiche, auf die die holografischen Spiegelflächen nicht ausgelegt sind, sind sie fast vollständig transparent. Damit lassen sich solche Elemente auch im Sichtbereich (Durchblickbereich) der Lichtleiteranordnung 14 positionieren, ohne vom Benutzer wahrgenommen zu werden. Mit Volumenhologrammen lassen sich somit auf sehr flexible Weise Umlenkeinrichtungen für optische Systeme zum Übertragen von Quellbildern realisieren. So kann beispielsweise der Abstand der Umlenkeinrichtung zu den Auskoppel- und Einkoppelelementen 26 und 18 (Fig. 1A, 1B) flexibel variiert werden.

Auch die oben beschriebenen Winkelspiegel 38 können als holographische Spiegel ausgebildet sein.

Durch die starke Winkelselektivität der Volumenhologramme kann auch vermieden werden, dass mehr als zwei Reflexionen in einem Winkelspiegel auftreten, da das Hologramm für die erste Spiegelfläche des Winkelspiegels für die bereits zweifach abgelenkten Lichtstrahlen fast vollständig transparent ist.

## Patentansprüche

1. Optisches System zum Übertragen eines Quellbildes, mit einer Lichtleiteranordnung (14), die einen Lichtübertragungskanal (15) definiert, mit einer optischen Einkoppelanordnung (18), und mit einer optischen Auskoppelanordnung (26), wobei die Einkoppelanordnung (18) dazu ausgebildet ist, von dem Quellbild ausgehendes Licht in die Lichtleiteranordnung (14) derart einzukoppeln, dass das Licht in der Lichtleiteranordnung (14) durch Totalreflexion propagieren kann, und wobei die Auskoppelanordnung (26) dazu ausgebildet ist, das in der Lichtleiteranordnung (14) propagierte Licht aus der Lichtleiteranordnung (14) auszukoppeln, wobei die Lichtleiteranordnung (14) eine optische Umlenkeinrichtung (30) aufweist, die in Propagationsrichtung des Lichtes in der Lichtleiteranordnung (14) gesehen zwischen der Einkoppelanordnung (18) und der Auskoppelanordnung (26) angeordnet und dazu ausgebildet ist, von der Einkoppelanordnung (18) mit unterschiedlichen Strahlwinkeln ausgehende und auf die Umlenkeinrichtung (30) divergent einfallende Lichtstrahlenbündel gebündelt zur Auskoppelanordnung (26) hin umzulenken, wobei die Umlenkeinrichtung (30) Winkelspiegel (38) aufweist, **dadurch gekennzeichnet, dass** die Winkelspiegel (38) entlang eines Kreislinienabschnitts angeordnet sind.

2. Optisches System nach Anspruch 1, **dadurch gekennzeichnet, dass** die Umlenkeinrichtung (30) dazu ausgebildet ist, die auf sie einfallenden Lichtstrahlenbündel so umzulenken, dass ein Winkel zwischen einfallendem und umgelenktem Lichtstrahlenbündel für alle Lichtstrahlenbündel gleich ist.

3. Optisches System nach Anspruch 1 oder 2, **dadurch gekennzeichnet, dass** die Umlenkeinrichtung (30) als Pupillen-Relaisoptik ausgebildet ist, die eine quellbildseitige Eintrittspupille auf eine augenseitige Austrittspupille abbildet.

4. Optisches System nach einem der Ansprüche 1 bis 3, **dadurch gekennzeichnet, dass** die Umlenkeinrichtung (30) in die Lichtleiteranordnung (14) eingebettet ist.

5. Optisches System nach einem der Ansprüche 1 bis 4, **dadurch gekennzeichnet, dass** die Umlenkeinrichtung (30) nahe einem Rand der Lichtleiteranordnung (14) angeordnet ist.

6. Optisches System nach Anspruch 5, **dadurch gekennzeichnet, dass** die Umlenkeinrichtung (30), wenn das optische System (10) am Kopf getragen wird, am oberen und/oder unteren und/oder nasalen und/oder temporalen Rand (46, 48, 50) der Lichtleiteranordnung (14) angeordnet ist.

7. Optisches System nach einem der Ansprüche 1 bis 6, **dadurch gekennzeichnet, dass** die Winkelspiegel (38) so angeordnet bzw. orientiert sind, dass Schnittpunkte (52) von auf die Winkelspiegel (38) einfallenden und von den Winkelspiegeln (38) reflektierten Lichtstrahlen auf einem Kreislinienabschnitt liegen.

8. Optisches System nach einem der Ansprüche 1 bis 7, **dadurch gekennzeichnet, dass** Scheitelabschnitte (54) der Winkelspiegel (38) abgeschnitten sind, und/oder dass nicht genutzte Bereiche der Winkelspiegel (38) nicht reflektierend ausgebildet sind.

9. Optisches System nach einem der Ansprüche 1 bis 8, **dadurch gekennzeichnet, dass** die Winkelspiegel (38) mit einer hinsichtlich ihrer Reflexion winkelselektiven Beschichtung versehen sind.

10. Optisches System nach einem der Ansprüche 1 bis 9, **dadurch gekennzeichnet, dass** die Winkelspiegel (38) an ihrer Offenseite eine Mindestweite von 0,5 mm aufweisen.

11. Optisches System nach einem der Ansprüche 1 bis 10, **dadurch gekennzeichnet, dass** die Winkelspiegel (38) untereinander unterschiedliche Orientierungen aufweisen.

12. Optisches System nach einem der Ansprüche 1 bis 11, **dadurch gekennzeichnet, dass** der Lichtübertragungskanal ein erster Lichtübertragungskanal (15a) zur Übertragung eines ersten Teilfeldes des Quellbildes ist und die Lichtleiteranordnung (14) einen zweiten Lichtübertragungskanal (15b) zur Übertragung eines zweiten Teilfeldes des Quellbildes aufweist, und dass die Umlenkeinrichtung eine erste Umlenkeinrichtung (30a), die dem ersten Lichtübertragungskanal (15a) zugeordnet ist, und eine zweite Umlenkeinrichtung (30b) aufweist, die dem zweiten Lichtübertragungskanal (15b) zugeordnet ist.

13. Optisches System nach einem der Ansprüche 1 bis 12, **dadurch gekennzeichnet, dass** die Einkoppelanordnung (18) zumindest einen Spiegel oder eine diffraktive Struktur aufweist.

14. Optisches System nach einem der Ansprüche 1 bis 13, **gekennzeichnet durch** ein Display (12), das das Quellbild bereitstellt, und eine Optik (19), insbesondere Kollimationsoptik, die das von dem Quellbild ausgehende Licht auf die Einkoppelanordnung (18) richtet.

15. Datenbrille, Videobrille, oder Head-Up-Display mit einem optischen System (10) nach einem der Ansprüche 1 bis 14.

## Claims

1. Optical system for transmitting a source image, comprising a light guide arrangement (14) which defines a light transmission channel (15), comprising an optical input coupling arrangement (18), and comprising an optical output coupling arrangement (26), the input coupling arrangement (18) being embodied to couple light emanating from the source image into the light guide arrangement (14) in such a way that the light can propagate in the light guide arrangement (14) by way of total-internal reflection, and the output coupling arrangement (26) being embodied to couple the light that has propagated in the light guide arrangement (14) out of the light guide arrangement (14), wherein the light guide arrangement (14) has an optical deflection device (30) which, as seen in the direction of propagation of the light in the light guide arrangement (14), is disposed between the input coupling arrangement (18) and the output coupling arrangement (26) and which is embodied to deflect light beams, which emanate from the input coupling arrangement (18) at different beam angles and which are incident on the deflection device (30) in a divergent fashion, to the output coupling arrangement (26) in focused fashion, wherein the deflection device (30) has angled mirrors (38), **characterized in that** the angled mirrors (38) are disposed along a circumferential section.

2. Optical system according to Claim 1, **characterized in that** the deflection device (30) is embodied to deflect the light beams, which are incident thereon, in such a way that an angle between the incident and deflected light beam is the same for all light beams.

3. Optical system according to Claim 1 or 2, **characterized in that** the deflection device (30) is embodied as a pupil relay optical unit, which images a source image-side entry pupil onto an eye-side exit pupil.

4. Optical system according to any one of Claims 1 to 3, **characterized in that** the deflection device (30) is embedded in the light guide arrangement (14).

5. Optical system according to any one of Claims 1 to 4, **characterized in that** the deflection device (30) is disposed close to an edge of the light guide arrangement (14).

6. Optical system according to Claim 5, **characterized in that** the deflection device (30) is disposed at the upper and/or lower and/or nasal and/or temporal edge (46, 48, 50) of the light guide arrangement (14) when the optical system (10) is worn on the head.

7. Optical system according to any one of Claims 1 to 6, **characterized in that** the angled mirrors (38) are disposed or oriented in such a way that the points of intersection (52) of light rays incident on the angled mirrors (38) and reflected by the angled mirrors (38) are located on a circumferential section.

8. Optical system according to any one of Claims 1 to 7, **characterized in that** the apex sections (54) of the angled mirrors (38) are cut off, and/or **in that** unused regions of the angled mirrors (38) are embodied as non-reflective.

9. Optical system according to any one of Claims 1 to 8, **characterized in that** the angled mirrors (38) are provided with a coating that is angle-selective in respect of its reflection.

10. Optical system according to any one of Claims 1 to 9, **characterized in that** the angled mirrors (38) have a minimum width of 0.5 mm on their open side.

11. Optical system according to any one of Claims 1 to 10, **characterized in that** the angled mirrors (38) have different orientations from one another.

12. Optical system according to any one of Claims 1 to 11, **characterized in that** the light transmission channel is a first light transmission channel (15a) for transmitting a first partial field of the source image and the light guide arrangement (14) has a second light transmission channel (15b) for transmitting a second partial field of the source image, and **in that** the deflection device has a first deflection device (30a), assigned to the first light transmission channel (15a), and a second deflection device (30b), assigned to the second light transmission channel (15b).

13. Optical system according to any one of Claims 1 to 12, **characterized in that** the input coupling arrangement (18) has at least one mirror or a diffractive structure.

14. Optical system according to any one of Claims 1 to 13, **characterized by** a display (12), which provides the source image, and an optical unit (19), in particular a collimation optical unit, which directs the light emanating from the source image onto the input coupling arrangement (18).

15. Pair of smartglasses, video glasses or head-up display comprising an optical system (10) according to any one of Claims 1 to 14.

## Revendications

1. Système optique destiné à transmettre une image source, ledit système comprenant un ensemble conducteur de lumière (14) qui définit un canal de transmission de lumière (15), un ensemble d'injection par couplage optique (18) et un ensemble de sortie par couplage optique (26), l'ensemble d'injection par couplage (18) étant conçu pour injecter par couplage la lumière sortant de l'image source dans l'ensemble conducteur de lumière (14) de manière à ce que la lumière puisse se propager dans l'ensemble conducteur de lumière (14) par réflexion totale, et l'ensemble de sortie par couplage (26) étant conçu pour faire sortir par couplage de l'ensemble conducteur de lumière (14) la lumière propagée dans l'ensemble conducteur de lumière (14), l'ensemble conducteur de lumière (14) comportant un dispositif de déviation optique (30) qui, vu dans la direction de propagation de la lumière dans l'ensemble conducteur de lumière (14), est disposé entre l'ensemble d'injection par couplage (18) et l'ensemble de sortie par couplage (26) et étant conçu pour dévier les faisceaux de rayons lumineux, qui sortent de l'ensemble d'injection par couplage (18) suivant différents angles de rayons et qui sont incidents de manière divergente au dispositif de déviation (30), en faisceau en direction de l'ensemble de sortie par couplage (26), le dispositif de déviation (30) comportant des miroirs d'angle (38), **caractérisé en ce que** les miroirs d'angle (38) sont disposés le long d'un segment de cercle.

2. Système optique selon la revendication 1, **caractérisé en ce que** le dispositif de déviation (30) est conçu pour dévier les faisceaux de rayons lumineux qui sont incident à celui-ci de sorte qu'un angle entre les faisceaux de rayons lumineux incidents et déviés soient le même pour tous les faisceaux de rayons lumineux.

3. Système optique selon la revendication 1 ou 2, **caractérisé en ce que** le dispositif de déviation (30) est conçu sous la forme d'une optique relais pupillaire qui reproduit une pupille d'entrée côté image source sur une pupille de sortie côté œil.

4. Système optique selon l'une des revendications 1 à 3, **caractérisé en ce que** le dispositif de déviation (30) est incorporé dans l'ensemble conducteur de lumière (14).

5. Système optique selon l'une des revendications 1 à 4, **caractérisé en ce que** le dispositif de déviation (30) est disposé à proximité d'un bord de l'ensemble conducteur de lumière (14).

6. Système optique selon la revendication 5, **caractérisé en ce que** le dispositif de déviation (30), lorsque le système optique (10) est porté sur la tête, est disposé sur le bord supérieur et/ou inférieur et/ou nasal et/ou temporal (46, 48, 50) de l'ensemble conducteur de lumière (14).

7. Système optique selon l'une des revendications 1 à 6, **caractérisé en ce que** les miroirs d'angle (38) sont disposés ou orientés de telle sorte que des points d'intersection (52) de rayons lumineux incidents aux miroirs d'angle (38) et réfléchis par les miroirs d'angle (38) sont situés sur un segment de cercle.

8. Système optique selon l'une des revendications 1 à 7, **caractérisé en ce que** des portions de sommet (54) des miroirs d'angle (38) sont découpées et/ou **en ce que** des zones inutilisées des miroirs d'angle (38) sont non réfléchissantes.

9. Système optique selon l'une des revendications 1 à 8, **caractérisé en ce que** les miroirs d'angle (38) sont pourvus d'un revêtement angulairement sélectif quant à leur réflexion.

10. Système optique selon l'une des revendications 1 à 9, **caractérisé en ce que** les miroirs d'angle (38) ont une largeur minimale de 0,5 mm sur leur côté ouvert.

11. Système optique selon l'une des revendications 1 à 10, **caractérisé en ce que** les miroirs d'angle (38) ont des orientations différentes les unes des autres.

12. Système optique selon l'une des revendications 1 à 11, **caractérisé en ce que** le canal de transmission de lumière est un premier canal de transmission de lumière (15a) destiné à transmettre un premier champ partiel de l'image source et l'ensemble conducteur de lumière (14) comporte un deuxième canal de transmission de lumière (15b) destiné à transmettre un deuxième champ partiel de l'image source, et **en ce que** le dispositif de déviation comporte un premier dispositif de déviation (30a) qui est associé au premier canal de transmission de lumière (15a) et un deuxième dispositif de déviation (30b) qui est associé au deuxième canal de transmission de lumière (15b) .

13. Système optique selon l'une des revendications 1 à 12, **caractérisé en ce que** l'ensemble d'injection par couplage (18) comporte au moins un miroir ou une structure diffractive.

14. Système optique selon l'une des revendications 1 à 13, **caractérisé par** un dispositif d'affichage (12) qui fournit l'image source, et une optique (19), notamment une optique de collimation, qui dirige la lumière provenant de l'image source sur l'ensemble d'injection par couplage (18).

15. Lunettes de données, lunettes vidéo ou dispositif d'affichage tête haute comprenant un système optique (10) selon l'une des revendications 1 à 14.
